# EUROPEAN PATENT APPLICATION

(11) **EP 4 745 038 A1**
(43) Date of publication of application: **20.05.2026**
(21) Application number: 25216042.9
(22) Date of filing: 14.11.2025
(51) Int. Cl.: B64D 33/00, F01D 15/10, B64D 33/08, F02C 7/12, F02C 7/32

(54) **ELECTRIC CABLE CONDUIT FOR AIRCRAFT POWERPLANT**

(30) Priority: 14.11.2024 US 202418947768
(71) Applicant: RTX Corporation, Farmington, CT 06032 (US)
(72) Inventor: CLARK, Thomas E., Wells, 04090 (US); CHOE, Jung Muk, Glastonbury, 06033 (US)
(74) Representative: Dehns

(57) **Abstract**

An assembly for an aircraft powerplant (20) includes an engine case (72), a gearbox (102), a conduit (122), a first electric machine (92A), a first controller (94A) and a first electric cable (114A). The gearbox (102) is offset from the engine case (72). The conduit (122) extends longitudinally from a first end (124) of the conduit (122) to a second end (126) of the conduit (122). The conduit (122) is anchored to the engine case (72) at the first end (124) of the conduit (122) by a first conduit mount (136). The conduit (122) is anchored to the gearbox (102) at the second end (126) of the conduit (122) by a second conduit mount (138). The conduit (122) is self-supported longitudinally between the first conduit mount (136) and the second conduit mount (138). The first electric machine (92A) is mounted to the gearbox (102). The first controller (94A) is mounted to the engine case (72). The first electric cable (114A) electrically couples the first electric machine (92A) to the first controller (94A). The first electric cable (114A) extends longitudinally through a bore (134) of the conduit (122).

## Description

### Technical Field

This disclosure relates generally to an aircraft powerplant and, more particularly, to an electric machine system for the aircraft powerplant.

### Background Information

An aircraft powerplant such as an aircraft propulsion system may include one or more electric machines. Various electric machine systems are known in the art. While these known electric machine systems have various benefits, there is still room in the art for improvement.

### SUMMARY OF THE DISCLOSURE

According to an aspect of the present invention, an assembly is provided for an aircraft powerplant. This assembly includes an engine case, a gearbox, a conduit, a first electric machine, a first controller and a first electric cable. The gearbox is offset from the engine case. The conduit extends longitudinally from a first end of the conduit to a second end of the conduit. The conduit is anchored to the engine case at the first end of the conduit by a first conduit mount. The conduit is anchored to the gearbox at the second end of the conduit by a second conduit mount. The conduit is self-supported longitudinally between the first conduit mount and the second conduit mount. The first electric machine is mounted to the gearbox. The first controller is mounted to the engine case. The first electric cable electrically couples the first electric machine to the first controller. The first electric cable extends longitudinally through a bore of the conduit.

According to another aspect of the present invention, another assembly is provided for an aircraft powerplant. This assembly includes a fan case, a core case, a powerplant component, a conduit, a first electric machine, a first controller and a first electric cable. The core case is radially inboard of the fan case. The powerplant component is arranged with the core case. The conduit extends longitudinally from a first end of the conduit to a second end of the conduit. The conduit is attached to the fan case at the first end of the conduit by a first conduit mount. The conduit is attached to the powerplant component at the second end of the conduit by a second conduit mount. The first electric machine is mounted to the powerplant component. The first controller is mounted to the fan case. The first electric cable electrically couples the first electric machine to the first controller. The first electric cable extends longitudinally through a bore of the conduit.

According to still another aspect of the present invention, another assembly is provided for an aircraft powerplant. This assembly includes a first powerplant component, a second powerplant component, a conduit, a first electric machine, a first controller, a first electric cable and a cooling fluid source. The conduit extends longitudinally from a first end of the conduit to a second end of the conduit. The conduit is anchored to the first powerplant component at the first end of the conduit by a first conduit mount. The conduit is attached to the second powerplant component at the second end of the conduit by a second conduit mount. The first electric machine is mounted to the second powerplant component. The first controller is mounted to the first powerplant component. The first electric cable electrically couples the first electric machine to the first controller. The first electric cable extends longitudinally through a bore of the conduit. The cooling fluid source is fluidly coupled to the bore of the conduit. The cooling fluid source is configured to provide a cooling fluid to the conduit for cooling a section of the first electric cable within the conduit.

In an embodiment of the above, the assembly may also include a second electric machine, a second controller and a second electric cable. The second electric machine may be mounted to the second powerplant component. The second controller may be mounted to the first powerplant component. The second electric cable may electrically couple the second electric machine to the second controller. The second electric cable may extend longitudinally through the bore of the conduit next to the first electric cable.

In an embodiment according to any of the previous embodiments, the first powerplant component may be configured as or otherwise include an engine case. **In** addition or alternatively, the second powerplant component may be configured as or otherwise include a gearbox.

In an embodiment according to any of the previous embodiments, the powerplant component may be configured as or otherwise include an accessory gearbox.

In an embodiment according to any of the previous embodiments, the conduit may be free-floating and self-supported longitudinally between the first conduit mount and the second conduit mount.

In an embodiment according to any of the previous embodiments, the conduit may be free-floating longitudinally between the first conduit mount and the second conduit mount.

In an embodiment according to any of the previous embodiments, the conduit may be formed from a metal.

In an embodiment according to any of the previous embodiments, the conduit may be formed from a dielectric.

In an embodiment according to any of the previous embodiments, the conduit may be configured to shield electromagnetic interference produced by the first electric cable within the conduit.

In an embodiment according to any of the previous embodiments, the conduit may be configured to accommodate relative motion between the engine case and the gearbox during operation of the aircraft powerplant.

In an embodiment according to any of the previous embodiments, the first electric machine may be configurable as an electric motor. The first controller may be configurable as a motor controller for the electric motor.

In an embodiment according to any of the previous embodiments, the first electric machine may be configurable as an electric generator. The first controller may be configurable as a generator controller for the electric generator.

In an embodiment according to any of the previous embodiments, the assembly may also include a second electric machine, a second controller and a second electric cable. The second electric machine may be mounted to the gearbox. The second controller may be mounted to the engine case. The second electric cable may electrically couple the second electric machine to the second controller. The second electric cable may extend longitudinally through the bore of the conduit along the first electric cable.

In an embodiment according to any of the previous embodiments, the assembly may also include a thermal and/or electrical insulating material disposed between the gearbox and a portion of the conduit extending along the gearbox.

In an embodiment according to any of the previous embodiments, the gearbox may include a housing with a groove. A portion of the conduit extending along the gearbox may be disposed in the groove.

In an embodiment according to any of the previous embodiments, the gearbox may be configured as or otherwise include an accessory gearbox.

In an embodiment according to any of the previous embodiments, the assembly may also include an engine core and a core case at least partially housing the engine core. The engine core may include a flowpath, a compressor section, a combustor section and a turbine section. The flowpath may extend through the compressor section, the combustor section and the turbine section. The gearbox may be mounted to the core case.

In an embodiment according to any of the previous embodiments, the assembly may also include a cooling fluid source fluidly coupled to the bore of the conduit. The cooling fluid source may be configured to provide a cooling fluid to the conduit for cooling a section of the first electric cable within the conduit.

In an embodiment according to any of the previous embodiments, the cooling fluid source may be or otherwise include a compressor bleed orifice.

In an embodiment according to any of the previous embodiments, the engine case may be configured as a fan case.

In an embodiment according to any of the previous embodiments, the assembly may also include a bifurcation extending across a bypass flowpath. An intermediate section of the conduit, between the first conduit mount and the second conduit mount, may extend through an interior of the bifurcation.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial schematic illustration of an aircraft propulsion system.
FIG. 2 is a schematic illustration of a portion of the aircraft propulsion system at an electric machine system.
FIG. 3 is a perspective illustration of a portion of the aircraft propulsion system with a cable conduit.
FIG. 4 is an end view illustration of a portion of the aircraft propulsion system with the cable conduit.
FIG. 5 is a perspective illustration of a portion of the aircraft propulsion system with another cable conduit.
FIG. 6 is a partial sectional illustration at an insulated interface between the cable conduit and a gearbox.
FIG. 7 is a partial sectional illustration at a grooved interface between the cable conduit and the gearbox.

### DETAILED DESCRIPTION

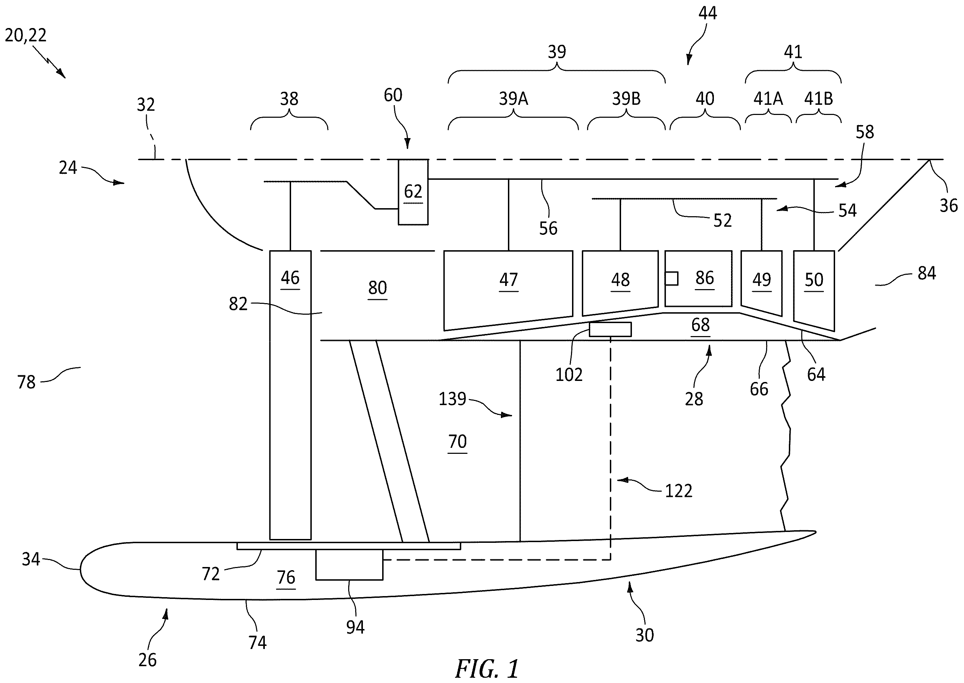

FIG. 1 illustrates a powerplant 20 for an aircraft. The aircraft may be an airplane, a drone (e.g., an unmanned aerial vehicle (UAV)) or any other manned or unmanned aerial vehicle or system. For ease of description, the aircraft powerplant 20 is described below as a propulsion system 22 for the aircraft and, more particularly, as a turbofan propulsion system. The aircraft powerplant 20 of the present disclosure, however, is not limited to such an exemplary propulsion system. Moreover, the aircraft powerplant 20 is not limited to propulsion system applications. The aircraft powerplant 20, for example, may also be configured as an electrical power system for the aircraft.

The aircraft propulsion system 22 includes a gas turbine engine 24 (e.g., a turbofan engine) housed within a stationary engine housing 26, which engine housing 26 of FIG. 1 includes an inner housing structure 28 and an outer housing structure 30. The aircraft propulsion system 22 extends axially along an axis 32 between an axial forward, upstream end 34 of the aircraft propulsion system 22 and an axial aft, downstream end 36 of the aircraft propulsion system 22. Briefly, the axis 32 may be a centerline axis of the aircraft propulsion system 22, the turbine engine 24 and/or one or more of its members. The axis 32 may also or alternatively be a rotational axis for one or more members of the turbine engine 24.

The turbine engine 24 of FIG. 1 includes a propulsor section 38 (e.g., a fan section), a compressor section 39, a combustor section 40 and a turbine section 41. The compressor section 39 of FIG. 1 includes a low pressure compressor (LPC) section 39A and a high pressure compressor (HPC) section 39B. The turbine section 41 of FIG. 1 includes a high pressure turbine (HPT) section 41A and a low pressure turbine (LPT) section 41B. Here, at least (or only) the LPC section 39A, the HPC section 39B, the combustor section 40, the HPT section 41A and the LPT section 41B collectively form a core 44 of the turbine engine 24.

The engine sections 38-41B may be arranged sequentially along the axis 32 within the engine housing 26. The propulsor section 38 includes a bladed propulsor rotor 46; e.g., a fan rotor. The LPC section 39A includes a bladed low pressure compressor (LPC) rotor 47. The HPC section 39B includes a bladed high pressure compressor (HPC) rotor 48. The HPT section 41A includes a bladed high pressure turbine (HPT) rotor 49. The LPT section 41B includes a bladed low pressure turbine (LPT) rotor 50.

The HPC rotor 48 is coupled to and rotatable with the HPT rotor 49. The HPC rotor 48 of FIG. 1, for example, is connected to the HPT rotor 49 through a high speed shaft 52. At least (or only) the HPC rotor 48, the HPT rotor 49 and the high speed shaft 52 collectively form a high speed rotating assembly 54; e.g., a high speed spool of the engine core 44. This high speed rotating assembly 54 of FIG. 1 and its members 48, 49 and 52 are rotatable about the axis 32. However, it is contemplated the high speed rotating assembly 54 may alternatively be rotatable about another axis radially and/or angularly offset from the rotational axis of the propulsor rotor 46 and/or the centerline axis of the turbine engine 24.

The LPC rotor 47 is coupled to and rotatable with the LPT rotor 50. The LPC rotor 47 of FIG. 1, for example, is connected to the LPT rotor 50 through a low speed shaft 56. At least (or only) the LPC rotor 47, the LPT rotor 50 and the low speed shaft 56 collectively form a low speed rotating assembly 58; e.g., a low speed spool of the engine core 44. This low speed rotating assembly 58 is further coupled to the propulsor rotor 46 through a drivetrain 60. The drivetrain 60 may be configured as a geared drivetrain, where a geartrain 62 (e.g., a transmission, a speed change device, an epicyclic geartrain, etc.) is disposed between and operatively couples the propulsor rotor 46 to the low speed rotating assembly 58 and its LPT rotor 50. With this arrangement, the propulsor rotor 46 may rotate at a different (e.g., slower) rotational speed than the low speed rotating assembly 58 and its LPT rotor 50. Alternatively, the drivetrain 60 may be configured as a direct drive drivetrain, where the geartrain 62 is omitted. With such an arrangement, the propulsor rotor 46 rotates at a common (the same) rotational speed as the low speed rotating assembly 58 and its LPT rotor 50. The low speed rotating assembly 58 of FIG. 1 and its members 47, 50 and 56 as well as the propulsor rotor 46 are rotatable about the axis 32. However, it is contemplated the low speed rotating assembly 58 may alternatively be rotatable about another axis radially and/or angularly offset from the rotational axis of the propulsor rotor 46 and/or the centerline axis of the turbine engine 24.

The inner housing structure 28 of FIG. 1 includes an inner case 64 (e.g., a core case) for the turbine engine 24, an inner nacelle structure 66 (sometimes referred to as an inner fixed structure (IFS)) and an internal inner housing compartment 68. The inner case 64 is disposed radially outboard of, extends axially along and may circumscribe one or more or all of the engine sections 39A-41B and their respective engine rotors 47-50. The inner case 64 may thereby house and provide a support structure for the respective engine sections 39A-41B and their respective engine rotors 47-50. The inner nacelle structure 66 is configured to provide an aerodynamic cover over the engine core 44 and its inner case 64. The inner housing compartment 68 of FIG. 1 is formed by and is disposed radially between the inner case 64 and an inner barrel of the inner nacelle structure 66. The inner housing structure 28 and its inner nacelle structure 66 may also form a radial inner peripheral boundary of a (e.g., annular) bypass flowpath 70 within the aircraft propulsion system 22.

The outer housing structure 30 of FIG. 1 includes an outer case 72 (e.g., a fan case) for the turbine engine 24, an outer nacelle structure 74 and an internal outer housing compartment 76. The outer case 72 is disposed radially outboard of, extends axially along and may circumscribe the propulsor section 38 and its propulsor rotor 46. The outer case 72 may thereby house and provide a containment structure for the propulsor section 38 and its propulsor rotor 46. The outer nacelle structure 74 is configured to provide an aerodynamic cover over the outer case 72. The outer housing compartment 76 of FIG. 1 is at least partially formed by and disposed radially between the outer case 72 and an outer portion (e.g., fan cowls) of the outer nacelle structure 74. The outer housing structure 30 and its outer nacelle structure 74 may also form a radial outer peripheral boundary of the bypass flowpath 70.

During operation, ambient air from outside of the aircraft enters the aircraft propulsion system 22 and its turbine engine 24 through an airflow inlet 78. This air is directed across the propulsor section 38 and into a (e.g., annular) core flowpath 80 and the bypass flowpath 70. The core flowpath 80 of FIG. 1 extends sequentially through the LPC section 39A, the HPC section 39B, the combustor section 40, the HPT section 41A and the LPT section 41B from an airflow inlet 82 into the core flowpath 80 to a combustion products exhaust 84 out from the core flowpath 80 and the engine core 44. The air entering the core flowpath 80 may be referred to as "core air". The bypass flowpath 70 extends through a bypass duct, which bypass flowpath 70 and bypass duct bypass (e.g., are disposed radially outboard of and extend along) the engine core 44 and the inner housing structure 28. The air within the bypass flowpath 70 may be referred to as "bypass air".

The core air is compressed by the LPC rotor 47 and the HPC rotor 48 and is directed into a (e.g., annular) combustion chamber 86 of a (e.g., annular) combustor in the combustor section 40. Fuel is injected into the combustion chamber 86 by one or more fuel injectors and mixed with the compressed core air to provide a fuel-air mixture. This fuel-air mixture is ignited and combustion products thereof flow through and sequentially drive rotation of the HPT rotor 49 and the LPT rotor 50 about the axis 32. The rotation of the HPT rotor 49 and the LPT rotor 50 respectively drive rotation of the HPC rotor 48 and the LPC rotor 47 about the axis 32 and, thus, compression of the air received from the core inlet 82. The rotation of the LPT rotor 50 also drives rotation of the propulsor rotor 46. The rotation of the propulsor rotor 46 propels the bypass air through and out of the bypass flowpath 70. The propulsion of the bypass air may account for a majority of thrust generated by the turbine engine 24 of FIG. 1.

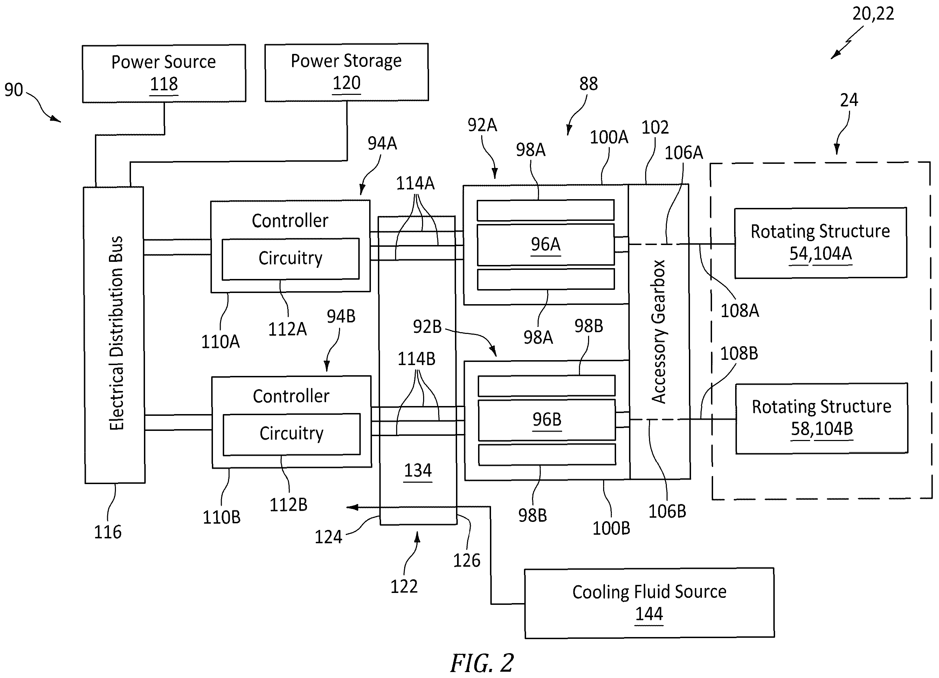

Referring to FIG. 2, the aircraft propulsion system 22 also includes an electric machine system 88 electrically coupled to an electrical system 90 for the aircraft. The electric machine system 88 of FIG. 2 includes one or more electric machines 92A and 92B (generally referred to as "92") and one or more electric machine (EM) controllers 94A and 94B (generally referred to as "94"). For ease of description, each electric machine 92 of FIG. 2 is described below as being electrically coupled to, controlled by and/or otherwise associated with a single, dedicated one of the EM controllers 94. However, it is contemplated a single EM controller may alternatively be electrically coupled to, may control and/or may otherwise be associated with multiple electric machines. It is also contemplated multiple EM controllers may be electrically coupled to, may control and/or may otherwise be associated with one or more common electric machines.

Each electric machine 92A, 92B of FIG. 2 includes an electric machine rotor 96A, 96B (generally referred to as "96"), an electric machine stator 98A, 98B (generally referred to as "98") and an electric machine housing 100A, 100B (generally referred to as "100"); e.g., a case. The machine rotor 96 is rotatable about a rotational axis of the machine rotor 96, which rotational axis may also be an axial centerline of the electric machine 92. The machine stator 98 of FIG. 2 is radially outboard of and circumscribes the machine rotor 96. With this arrangement, each electric machine 92 is configured as a radial flux electric machine. The electric machines 92 of the present disclosure, however, are not limited to such an exemplary rotor-stator configuration nor to radial flux arrangements. The machine rotor 96, for example, may alternatively be radially outboard of and circumscribe the machine stator 98. In another example, the machine rotor 96 may be axially next to the machine stator 98 configuring the respective electric machine 92 as an axial flux electric machine. Referring again to FIG. 2, the machine rotor 96 and the machine stator 98 are at least partially or completely housed within and interior of the machine housing 100.

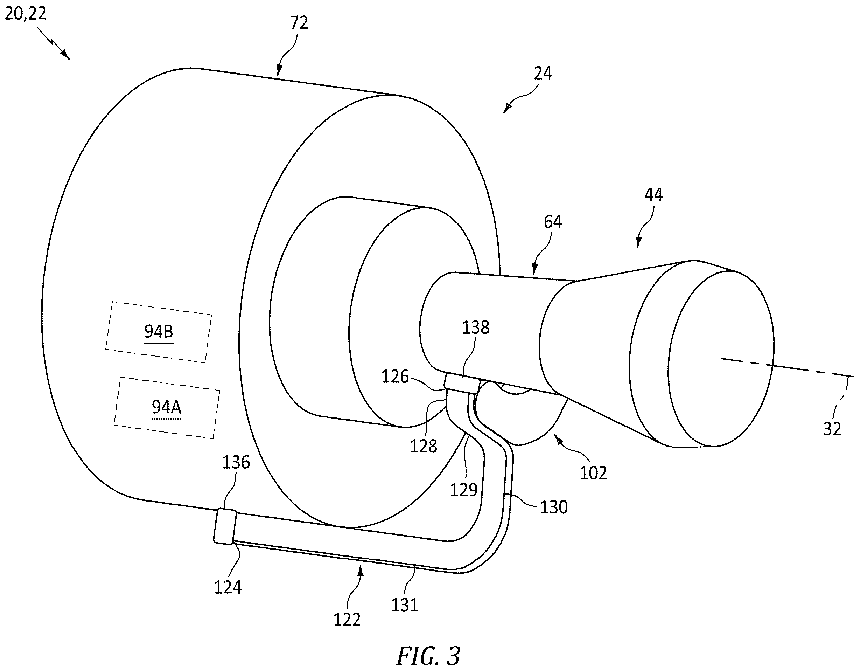

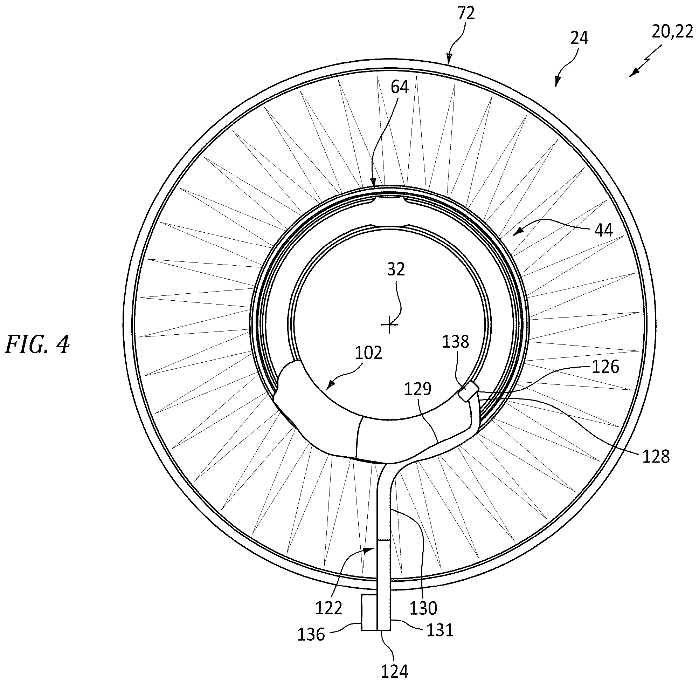

The electric machines 92 may be mounted to a common stationary component of the aircraft propulsion system 22. Each electric machine 92 of FIG. 2, for example, is mounted to a gearbox 102 (e.g., an accessory gearbox) for the turbine engine 24. Referring to FIG. 1, the gearbox 102 may be disposed within the inner housing compartment 68. The gearbox 102 of FIG. 1, for example, is located radially outboard of and next to the inner case 64, and the gearbox 102 is also mounted to the inner case 64. Here, the gearbox 102 is offset radially outward from the inner case 64 (see also FIGS. 3 and 4) and offset radially inward from the outer case 72.

Referring to FIG. 2, each electric machine 92A, 92B may be operatively coupled to a rotating structure 104A, 104B (generally referred to as "104") of the aircraft propulsion system 22 through the gearbox 102. Each machine rotor 96A, 96B of FIG. 2, for example, is mechanically coupled to a respective gear system 106A, 106B (generally referred to as "106") of the gearbox 102, and the gearbox gear system 106A, 106B is mechanically coupled to the respective rotating structure 104 through a respective drivetrain 108A, 108B (generally referred to as "108"). This drivetrain 108 may be configured as or otherwise include a shaft, a tower shaft assembly, another gearbox (e.g., an angle gearbox), and/or the like. The rotating structure 104 may be a part of the turbine engine 24. The rotating structure 104, for example, may be configured as one of the engine rotating assemblies 54, 58 (see FIG. 1). Alternatively, the rotating structure 104 may be part of an accessory for the turbine engine 24. The rotating structure 104, for example, may be configured as a pump rotor, an auxiliary compressor rotor, an actuator rotor, or the like. For ease of description, each machine rotor 96 of FIG. 2 is described below as being coupled to and rotatable with a unique one of the rotating structures 104 of the aircraft propulsion system 22. However, it is contemplated multiple machine rotors may alternatively be coupled to and rotatable with a common rotating structure. It is also contemplated a single one of the machine rotors may be coupled to and rotatable with multiple rotating structures, directly or through another device such as a differential or a clutch system. Rotating structures may comprise the high speed rotating assembly 54 and/or the low speed rotating assembly 58.

Each electric machine 92 of FIG. 2 may be configurable as an electric motor and/or an electric generator; e.g., an electric motor-generator. For example, during a motor mode of operation, a respective electric machine 92 may operate as the electric motor to convert electricity received from the aircraft electrical system 90 through the respective EM controller 94. The machine stator 98, for example, may generate an electromagnetic field with the machine rotor 96 using the electricity. This electromagnetic field may drive rotation of the machine rotor 96. The machine rotor 96, in turn, may provide mechanical power to and drive rotation of the respective rotating structure 104 through the respective drivetrain 108. This mechanical power may be provided to boost power or completely power the rotation of the respective rotating structure 104. By contrast, during a generator mode of operation, the electric machine 92 may operate as the electric generator to convert mechanical power received from the respective rotating structure 104 into electricity. Rotation of the machine rotor 96, for example, may be rotationally driven by rotation of the respective rotating structure 104 through the respective drivetrain 108. The rotation of the machine rotor 96 may generate an electromagnetic field with the machine stator 98, and the machine stator 98 may convert energy from the electromagnetic field into electricity. The respective electric machine 92 may then provide this electricity to the aircraft electrical system 90 through the respective EM controller 94 for storage and/or further use. The electric machines 92 of the present disclosure, however, are not limited to such exemplary operation. For example, one, some or all of the electric machines 92 may alternatively each be configured as a dedicated electric motor; e.g., without the electric generator functionality. One, some or all of the electric machines 92 may still alternatively each be configured as a dedicated electric generator; e.g., without the electric motor functionality.

Each EM controller 94A, 94B includes a controller housing 110A, 110B (generally referred to as "110") and internal controller circuitry 112A, 112B (generally referred to as "112"). The controller housing 110 may be configured as an enclosed case (e.g., a closed or sealed container) for the respective controller circuitry 112. The controller circuitry 112 is disposed within an interior of the controller housing 110; e.g., an internal chamber or other volume(s) within and enclosed by the controller housing 110. The controller circuitry 112 includes various electrical components, connectors and the like. Examples of the electrical components include, but are not limited to, printed circuit board(s) (PCB(s)), electrical inductor(s), electrical inverter(s), electrical amplifier(s), electrical switch(es) (e.g., contactor(s), relay(s), solid state power controller(s), etc.), processing device(s), memory, a communication module, electrical transformer(s), electrical rectifier(s), and/or the like.

Each EM controller 94A, 94B is electrically coupled to a respective one of the electric machines 92A, 92B through one or more electric cables 114A, 114B (generally referred to as "114"); e.g., high voltage electric cables, power feeder cables, etc. More particularly, the controller circuitry 112 of each EM controller 94 is electrically coupled to the respective electric machine 92 and its machine stator 98 through the respective electric cables 114.

Each EM controller 94 and its controller circuitry 112 are configured to control operation of a respective one of the electric machines 92. For example, when operating as the electric motor, the respective EM controller 94 and its controller circuitry 112 are configured to regulate a flow of electricity from the aircraft electrical system 90 to the respective electric machine 92. This electricity flow regulation may include: (a) turning-on the flow of electricity from the aircraft electrical system 90 to the respective electric machine 92 (e.g., electrically coupling the respective electric machine 92 to the aircraft electrical system 90); (b) turning-off the flow of electricity from the aircraft electrical system 90 to the respective electric machine 92 (e.g., electrically decoupling the respective electric machine 92 from the aircraft electrical system 90); (c) moderating the flow of electricity from the aircraft electrical system 90 to the respective electric machine 92. Here, the respective EM controller 94 operates as a motor controller. In another example, when operating as the electric generator, the respective EM controller 94 and its controller circuitry 112 are configured to regulate a flow of electricity from the respective electric machine 92 to the aircraft electrical system 90. This electricity flow regulation may include: (a) turning-on the flow of electricity from the respective electric machine 92 to the aircraft electrical system 90 (e.g., electrically coupling the respective electric machine 92 to the aircraft electrical system 90); (b) turning-off the flow of electricity from the respective electric machine 92 to the aircraft electrical system 90 (e.g., electrically decoupling the respective electric machine 92 from the aircraft electrical system 90); (c) moderating the flow of electricity from the respective electric machine 92 to the aircraft electrical system 90. Here, the respective EM controller 94 operates as a generator controller.

The EM controllers 94 may be disposed within the outer housing compartment 76 (see also FIG. 1). The EM controllers 94 of FIG. 3, for example, are located radially outboard of and next to the outer case 72, and the EM controllers 94 and their controller housings 110 are mounted to the outer case 72. This mounting of the EM controllers 94 to the outer case 72 may be a direct mounting or an indirect mounting through an intermediate mounting structure.

Referring to FIG. 2, the aircraft electrical system 90 includes an electrical distribution bus 116. This aircraft electrical system 90 may also include a power source 118 and/or a power storage 120. The electrical distribution bus 116 is electrically coupled to each of the electric machines 92 through their respective EM controllers 94. The electrical distribution bus 116 is also electrically coupled to the power source 118 and the power storage 120. With this arrangement, the electrical distribution bus 116 provides an intermediate connection between the various electrical aircraft propulsion system members 94A, 94B, 118 and/or 120. The power source 118 may be an electric generator powered by the turbine engine 24 (see FIG. 1) or an electric generator powered by another aircraft powerplant; e.g., an engine of a companion aircraft propulsion system, an engine of an auxiliary power unit (APU), etc. The power storage 120 is configured to receive electricity from the electrical distribution bus 116 for storage. The power storage 120 is also configured to provide the stored electricity to the electrical distribution bus 116. The power storage 120, for example, may be configured as or otherwise include one or more electricity storage devices; e.g., batteries, super capacitors, etc. Of course, it is contemplated one or more of the electric machines 92 (e.g., operating as the electric generator(s)) may also or alternatively operate as a power source for another one or more of the electric machines 92 (e.g., operating as the electric motor(s)).

To accommodate the relatively high power requirements associated with the electric machines 92, each electric cable 114 may be sized with a relatively low gauge. Such low gauge electric cables are relatively heavy and may require structural support for running relatively long cable lengths. The electric machine system 88 of FIGS. 3 and 4 therefore is provided with a cable conduit 122 for supporting, protecting and/or shielding the electric cables 114 between the electric machines 92 and the EM controllers 94.

The cable conduit 122 extends longitudinally along a longitudinal centerline of the cable conduit 122 between opposing longitudinal distal ends 124 and 126 of the cable conduit 122. In FIGS. 3 and 4, the conduit first end 124 is disposed radially outboard and axially forward of the conduit second end 126. The conduit first end 124 may thereby be referred to as an outer end and/or a forward end of the cable conduit 122. The conduit second end 126 may be referred to as an inner end and/or an aft end of the cable conduit 122.

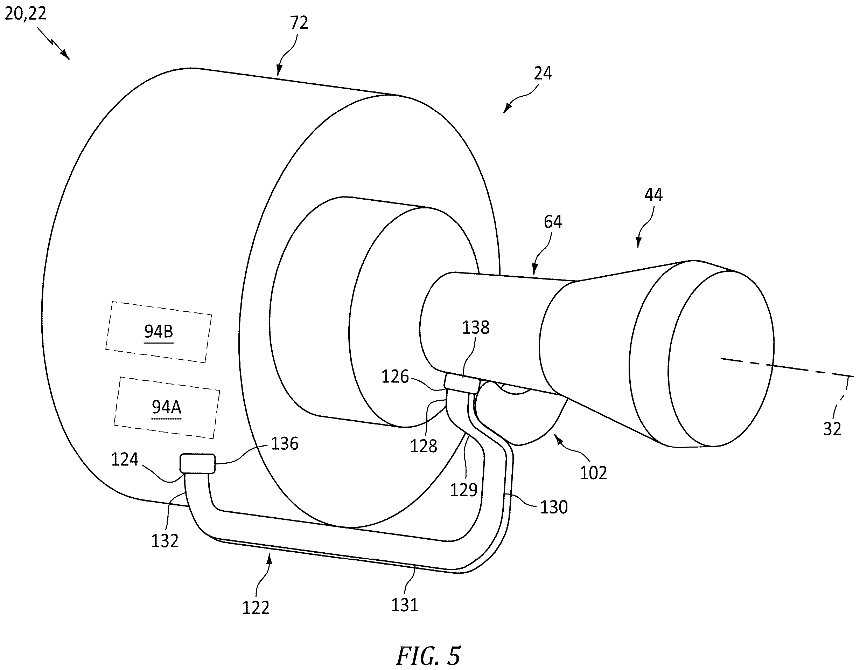

The cable conduit 122 and its conduit centerline may follow a tortuous (e.g., bending, non-straight) trajectory from the conduit first end 124 to the conduit second end 126. The cable conduit 122 of FIGS. 3 and 4, for example, includes one or more conduit segments 128-131. The inner end conduit segment 128 projects radially outward from the conduit second end 126 and meets the inner intermediate conduit segment 129 at a corner; e.g., a relatively tight radiused bend in the cable conduit 122. The inner intermediate conduit segment 129 extends laterally (e.g., tangentially and/or circumferentially) between the inner end conduit segment 128 and the outer intermediate conduit segment 130. The inner intermediate conduit segment 129 meets the outer intermediate conduit segment 130 at a corner; e.g., a relatively tight radiused bend in the cable conduit 122. The outer intermediate conduit segment 130 extends radially between the inner intermediate conduit segment 129 and the outer end conduit segment 131. The outer intermediate conduit segment 130 meets the outer end conduit segment 131 at a corner; e.g., a relatively gradual radiused bend in the cable conduit 122. The outer end conduit segment 131 projects axially to the conduit first end 124. The cable conduit 122 of the present disclosure, however, is not limited to such an exemplary configuration. The cable conduit 122 of FIG. 5, for example, includes an additional conduit segment 132 between the (e.g., axially extending) conduit segment 131 and the conduit first end 124, which additional conduit segment 132 projects circumferentially to the conduit first end 124.

Referring to FIG. 2, the cable conduit 122 is a tubular structure with an internal bore 134; e.g., an internal passage. This conduit bore 134 extends longitudinally along the conduit centerline within the cable conduit 122 from an opening at the conduit first end 124 to an opening at the conduit second end 126. With this arrangement, each of the electric cables 114 may extend longitudinally within the cable conduit 122 and through its conduit bore 134 between the respective EM controller 94 and the respective electric machine 92. Segments of the electric cables 114 within the cable conduit 122 are thereby supported by a sidewall of the cable conduit 122 as well as sheathed by the conduit sidewall.

Referring to FIGS. 3 and 4, the cable conduit 122 is anchored (e.g., rigidly and/or fixedly attached) to the outer case 72 by a first conduit mount 136. The cable conduit 122 is anchored (e.g., rigidly and/or fixedly attached) to the gearbox 102 by a second conduit mount 138. By contrast, a longitudinal length of the cable conduit 122 between the first conduit mount 136 and the second conduit mount 138 may be self-supported and free floating. The cable conduit 122, for example, may not be anchored or otherwise fixedly attached to any other structures along the longitudinal length of the cable conduit 122 between the first conduit mount 136 and the second conduit mount 138. However, the cable conduit 122 may extend along and may engage (e.g., abut against, contact, etc.) another structure of the aircraft propulsion system 22 longitudinally between the first conduit mount 136 and the second conduit mount 138. One or more of the conduit segments (e.g., 128 and/or 129), for example, may extend along and may even (or may not) rest against the gearbox 102. In another example, referring to FIG. 1, the outer intermediate conduit segment 130 may project through an interior of a bifurcation 139 (e.g., a lower bifurcation / splitter) of the engine housing 26 as the cable conduit 122 projects radially out from the inner housing compartment 68 and to the outer housing compartment 76. With the arrangement of FIGS. 3 and 4, the cable conduit 122 may accommodate relative motion (e.g., slight vibrational and/or thermal induced shifts) between the outer case 72 and the inner case 64 and, thus, the gearbox 102 attached to the inner case 64.

The cable conduit 122 of FIGS. 3 and 4 may be constructed from metal and/or a dielectric. More particularly, the material forming the cable conduit 122 may be selected such that the cable conduit 122 may shield electromagnetic interference (EMI) produced by the electric cables 114 during electric machine system operation. The material forming the cable conduit 122 may also be selected to reduce or prevent grounding faults.

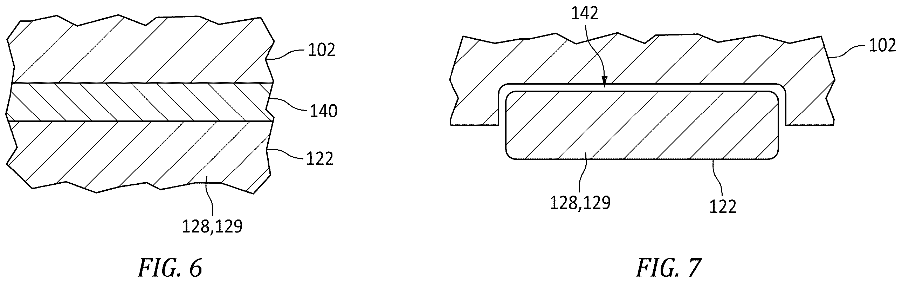

In some embodiments, referring to FIG. 6, a thermal and/or electrical insulating material 140 (e.g., a thermal and/or electrical insulating blanket) may be arranged between the cable conduit 122 and the gearbox 102. This thermal and/or electrical insulating material 140 may engage (e.g., contact) the cable conduit 122 and/or the gearbox 102. The thermal and/or electrical insulating material 140 may be attached to the cable conduit 122, the gearbox 102 or clamped between the cable conduit 122 and the gearbox 102.

In some embodiments, referring to FIG. 7, a portion of the cable conduit 122 (e.g., part or all of the conduit segment(s)) may be mated with a groove 142 in a housing (e.g., a case) of the gearbox 102. The conduit portion of FIG. 7, for example, is disposed in (e.g., seated in) and extends longitudinally along the gearbox groove 142. At least partially recessing the cable conduit 122 in the gearbox groove 142 may facilitate tighter packaging as well as loosely constrain movement of the cable conduit 122 proximate the gearbox 102.

In some embodiments, referring to FIG. 2, the cable conduit 122 may be fluidly coupled to a cooling fluid source 144. More particularly, the cooling fluid source 144 may be fluidly coupled to the conduit bore 134. This cooling fluid source 144 is configured to direct a cooling fluid into the conduit bore 134. This cooling fluid may flow along sections of the electric cables 114 within the conduit bore 134 thereby convectively cooling those electric cables 114. An example of the cooling fluid source 144 is a bleed (e.g., a compressor bleed orifice) along the core flowpath 80 (see FIG. 1). Here, the cooling fluid is compressed air; e.g., compressed core air. The present disclosure, however, is not limited to such an exemplary cooling fluid source. The conduit bore 134, for example, may alternatively be fluidly coupled with and downstream from one or more other compressed air sources or the like.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An assembly for an aircraft powerplant (20), comprising:
an engine case (72);
a gearbox (102) offset from the engine case (72);
a conduit (122) extending longitudinally from a first end (124) of the conduit (122) to a second end (126) of the conduit (122), the conduit (122) anchored to the engine case (72) at the first end (124) of the conduit (122) by a first conduit mount (136), the conduit (122) anchored to the gearbox (102) at the second end (126) of the conduit (122) by a second conduit mount (138), and the conduit (122) being self-supported longitudinally between the first conduit mount (136) and the second conduit mount (138);
a first electric machine (92A) mounted to the gearbox (102);
a first controller (94A) mounted to the engine case (72); and
a first electric cable (114A) electrically coupling the first electric machine (92A) to the first controller (94A), the first electric cable (114A) extending longitudinally through a bore (134) of the conduit (122).

2. The assembly of claim 1, wherein the conduit (122) is free-floating longitudinally between the first conduit mount (136) and the second conduit mount (138).

3. The assembly of claim 1 or 2, wherein the conduit (122) is formed from a metal and/or a dielectric.

4. The assembly of claim 1, 2 or 3, wherein the conduit (122) is configured to shield electromagnetic interference produced by the first electric cable (114A) within the conduit.

5. The assembly of any preceding claim, wherein the conduit (122) is configured to accommodate relative motion between the engine case (72) and the gearbox (102) during operation of the aircraft powerplant (20).

6. The assembly of any preceding claim, wherein
the first electric machine (92A) is configurable as an electric motor; and
the first controller (94A) is configurable as a motor controller for the electric motor.

7. The assembly of any preceding claim, wherein
the first electric machine (92A) is configurable as an electric generator; and
the first controller (94A) is configurable as a generator controller for the electric generator.

8. The assembly of any preceding claim, further comprising:
a second electric machine (92B) mounted to the gearbox (102);
a second controller (94B) mounted to the engine case (72); and
a second electric cable (114B) electrically coupling the second electric machine (92B) to the second controller (94b), the second electric cable (114B) extending longitudinally through the bore (134) of the conduit (122) along the first electric cable (114A).

9. The assembly of any preceding claim, further comprising a thermal and/or electrical insulating material (140) disposed between the gearbox (102) and a portion of the conduit (122) extending along the gearbox (102).

10. The assembly of any preceding claim, wherein
the gearbox (102) comprises a housing with a groove (142); and
a portion of the conduit (122) extending along the gearbox (102) is disposed in the groove (142).

11. The assembly of any preceding claim, wherein the gearbox (102) comprises an accessory gearbox.

12. The assembly of any preceding claim, further comprising:
an engine core (44) including a core flowpath (80), a compressor section (39), a combustor section (40) and a turbine section (41), the core flowpath (80) extending through the compressor section (39), the combustor section (40) and the turbine section (41); and
a core case (64) at least partially housing the engine core (44);
the gearbox (102) mounted to the core case (64).

13. The assembly of any preceding claim, further comprising a cooling fluid source (144) fluidly coupled to the bore (134) of the conduit (122), the cooling fluid source (144) configured to provide a cooling fluid to the conduit (134) for cooling a section of the first electric cable (114A_ within the conduit (122), optionally wherein the cooling fluid source (144) is a compressor bleed orifice.

14. The assembly of any preceding claim, wherein the engine case (72) is configured as a fan case.

15. The assembly of any preceding claim, further comprising:
a bifurcation (139) extending across a bypass flowpath (70);
an intermediate section (130) of the conduit (122) between the first conduit mount (136) and the second conduit mount (138) extending through an interior of the bifurcation (139).
